Europäisches Patentamt

European Patent Office

Office européen des brevets

(11) Veröffentlichungsnummer: **0 033 357**
**B1**

(12) **EUROPÄISCHE PATENTSCHRIFT**

(45) Veröffentlichungstag der Patentschrift: **24.04.85**

(21) Anmeldenummer: **80105280.4**

(22) Anmeldetag: **04.09.80**

(51) Int. Cl.⁴: **F 16 K 3/316**

(54) **Absperrschieber.**

(30) Priorität: **01.02.80 DE 3003646**

(43) Veröffentlichungstag der Anmeldung:
**12.08.81 Patentblatt 81/32**

(45) Bekanntmachung des Hinweises auf die
Patenterteilung:
**24.04.85 Patentblatt 85/17**

(84) Benannte Vertragsstaaten:
**BE FR GB IT**

(56) Entgegenhaltungen:
**CH-A- 225 217**
**DE-B-1 500 056**
**DE-U-1 868 900**
**FR-A-2 232 710**
**US-A-3 193 249**
**US-A-3 559 949**
**US-A-3 893 652**
**US-A-4 179 099**

(73) Patentinhaber: **Deutsche Babcock**
**Aktiengesellschaft**
**Duisburger Strasse 375**
**D-4200 Oberhausen 1 (DE)**

(72) Erfinder: **Böing, Kurt**
**Urnenfeld 18**
**D-4292 Rhede (DE)**
Erfinder: **Mehrhoff, Willi**
**Ottilienstrasse 61**
**D-4200 Oberhausen 1 (DE)**
Erfinder: **Meyer, Walter**
**Obermeidericher Strasse 42**
**D-4100 Duisburg 12 (DE)**

Courier Press, Leamington Spa, England.

**Beschreibung**

Die Erfindung betrifft einen Absperrschieber zum Verschließen von Rohrleitungen, in dessen Gehäuse eine oder mehrere Schieberplatten durch eine Spindel verstellbar angeordnet sind, wobei die Schieberplatten auf der der Spindel abgewandten Seite eine rechteckige Außenkontur aufweisen und mit vorstehenden Dichtflächen versehen sind, die mit kreisringförmigen vorstehenden Dichtflächen im Gehäuse des Schiebers zusammenwirken, wobei die Dichtfläche der Schieberplatte auf der der Spindel abgewandten Seite durch eine kreisringförmige Fläche gebildet und auf der anderen Seite einerseits durch die Umfangslinie eines halben Quadrats begrenzt ist, dessen Kantenlänge dem Durchmesser des größeren Kreises der kreisringförmigen Fläche entspricht.

Ein solcher Schieber ist aus der US—A— 3 193 249 bekannt. Er vermeidet einen Teil der Nachteile, die bei Schiebern mit gleich großen Dichtflächen auf den Schieberplatten und in dem Gehäuse auftreten und die darin bestehen, daß bei angehobenen Schieberplatte die Kontaktfläche reduziert ist und der gesamte Druck des Fluids auf eine verhältnismäßig kleine Fläche reduziert ist. Zu diesem Zweck sind bei dem bekannten Schieber die Dichtflächen auf der Schieberplatte innerhalb und außerhalb der Kreisringfläche vergrößert und so bemessen, daß der durch das fließende Medium verursachte Druck zwischen der platenseitigen und der gehäuseseitigen Dichtfläche konstant bleibt und einen zulässigen, durch das Material bedingten Höchstwert nicht überschreitet, während die Schieberplatte zwischen der Offenstellung und der Schließstellung bewegt wird.

Bei undoien bekannten Absperrschiebern, bei denen die kreisringförmigen Dichtflächen auf den Schieberplatten und die gehäuseseitigen Dichtflächen etwa gleich groß sind, tetren zusätzlich Schwierigkeiten dann auf, wenn ein solcher Absperrschieber, der z.B. innerhalb einer Sicherheitsschaltung angeordnet ist, geschlossen werden muß, während zu beiden Seiten des Absperrschiebers unterschiedlich hohe Drücke anstehen. Es besteht bei solchen hohen Druckunterschieden die Gefahr, daß sich die Schieberplatten innerhalb der gehäuseseitigen Führung schräg stellen. Diese Schrägstellung führt zu einer punktförmigen Auflage der Plattenkante des Absperrschiebers an der entsprechenden gehäuseseitigen Dichtfläche. Dadurch können diese Dichtflächen beschädigt werden, so daß die Dichtigkeit des Absperrschiebers beeinträchtigt werden kann. Weiterhin fürht diese Schrägstellung der Schieberplatten zu einer undefinierbaren Erhöhung der zum Schließen der Schieberplatten aufzuwendenden Stellkraft.

Durch die vorliegende Erfindung sollen diese Nachteile vermieden werden. Der Erfindung liegt daher die Aufgabe zugrunde, einen Absperrschieber zu schaffen, bei dem eine sichere, gerade Führung der Schieberplatten auch bei einem erhöhten anstehenden Druckunterschied möglich ist.

Diese Aufgabe wird bei einem gattungsgemäßen Absperrschieber erfindungsgemäß dadurch gelöst, daß die Dichtfläche der Schieberplatte auf der anderen Seite andererseits durch die Umfangslinie des kleineren Kreises der kreisringförmigen Fläche begrenzt ist, und daß keine susätzlichen Dichtflächen innerhalb des kleineren Kreises vorgesehen sind. Durch diese erfindungsgemäße Ausbildung der Schieberplatte ist die Dichtfläche gerade um einen solchen Betrag vergrößert, daß während der gesamten Schieberbewegung eine sichere und gerade Führung der Schieberplatten über die gesamte Breite ermöglicht wird. Eine Schrägstellung der Schieberplatten mit ihren nachteiligen Folgen ist dadurch vermieden. Zusätzlich wird die während der Schieberbewegung wirksame Auflage fläche der sich berührenden Dichtfläche vergrößert und damit die Flächenpressung herabgesetzt.

Ein Ausführungsbeispiel der Erfindung ist in der Zeichnung dargestellt. Es zeigen:

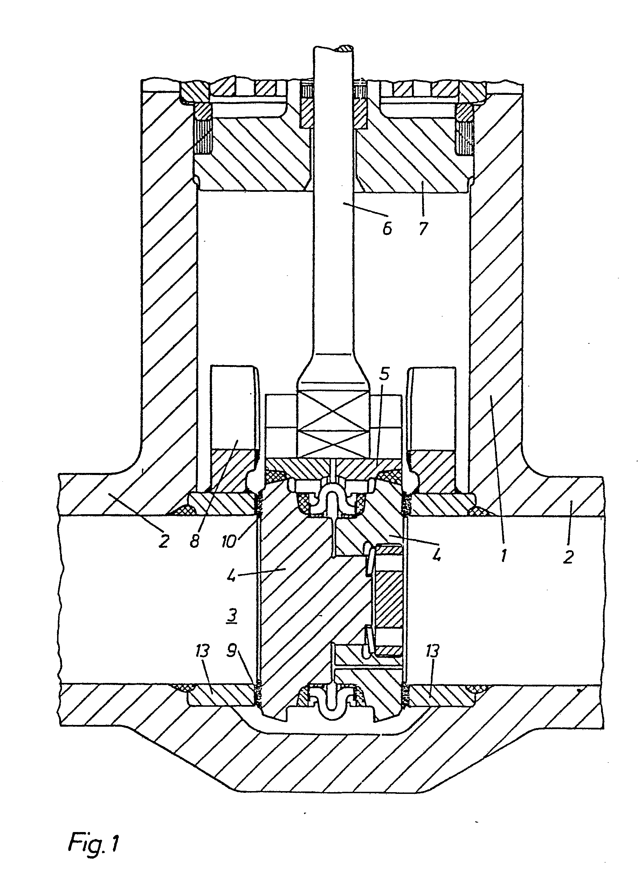

Fig. 1 einen Längsschnitt durch einen Absperrschieber gemäß der Erfindung,

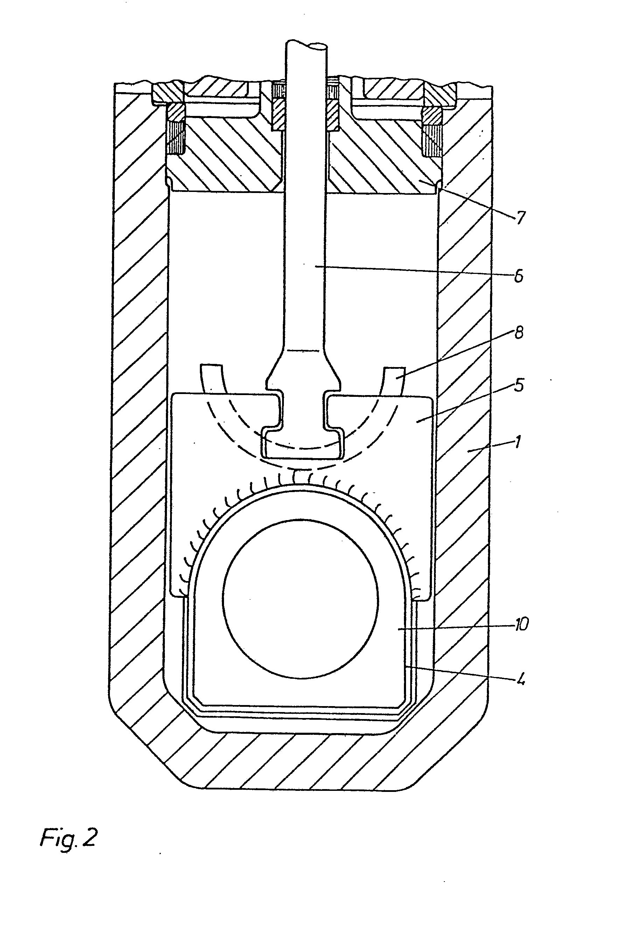

Fig. 2 den Schnitt II—II nach Fig. 1 und

Fig. 3 das Zusammenwirken der Dichtflächen bei teilweise geschlossenem Schieber.

Der Absperrschieber weist ein Gehäuse 1 mit zwei Rohrstutzen 2 auf, die einen Durchgangskanal 3 begrenzen. Die beiden Rohrstutzen 2 sind durch eine Schiebergarnitur voneinander getrennt. Die Schiebergarnitur umfaßt bei dem dargestellten Absperrschieber zwei parallel zueinander angeordnete Schieberplatten 4, von denen eine mit einem Absatz in eine entsprechende Ausnehmung in der anderen Schieberplatte 4 eingreift.

Jede Schieberplatte 4 ist mit einer Halteplatte 5 verbunden, die eine Ausnehmung zur Aufnahme des Fußes einer Spindel 6 aufweist. Die Spindel 6 ist abgedichtet durch einen das Gehäuse 1 verschließenden Deckel 7 geführt. An das obere Ende der Spindel 6 greift ein nicht dargestellter Antrieb an, über den die Spindel 6 in axialer Richtung verstellt wird. Dabei fährt die Spindel 6 die Schieberplatten 4 in Offen- bzw. in Schließstellung.

Oberhalb des Durchgangskanals 3 sind in dem Gehäuse 1 zu beiden Seiten der Schiebergarnitur Führungsringe 8 angeordnet. Die Führungsringe 8 sorgen bei Offenstellung des Absperrschiebers für eine ordnungsgemäße Führung der beiden Schieberplatten 4, insbesondere bei waagerechten Einbau der Armatur in eine senkrechte Rohrleitung.

Die Schieberplatten 4 sind innerhalb des Gehäuses 1 des Absperrschiebers zwischen gehäuseseitigen Dichtflächen 9 geführt, die durch Auftragsschweißen auf Dichtringe 13 des Gehäuses 1 aufgebracht sind. Die gehäuseseitigen Dichtflächen 9 sind als kreisringförmige Flächen ausgebildet, wobei der kleinere Durchmesser des Kreisringes dem Durchmesser des Durchgangskanales 3 entspricht. In der gleichen Ebene wie die gehäuseseitigen Dichtflächen 9 liegen auch die Führungsringe 8 oberhalb des Durchgangskanales 3.

Die Schieberplatten·4 sind auf ihrer der Spindel 6 abgewandten, also der unteren, Hälfte rechteckig ausgebildet. Die Schieberplatten 4 sind ebenfalls mit Dichtflächen 10 versehen, die mit den gehäuseseitigen Dichtflächen 9 zusammenwirken. Auf der oberen, der Spindel 6 zugewandten Hälfte der Schieberplatten 4 sind diese Dichtflächen 10 kreisringförmig ausgebildet. Die Durchmesser dieser halben Kreisringfläche stimmen etwa mit den Durchmessern der kreisringförmigen, gehäuseseitigen Dichtfläche 9 überein.

Auf der unteren, rechteckig ausgebildeten Hälfte der Schieberplatten 4 ist die Dichtfläche 10 über die der gehäuseseitigen Dichtfläche entsprechende Flächengröße hinaus vergrößert. Die Dichtfläche 10 ist hier einerseits begrenzt von der Umfangslinie des kleineren Kreises der kreisringförmigen Dichtfläche in der oberen Hälfte. Die andere Umgrenzung ist gebildet durch die Umfangslinie eines halben Quadrates, dessen untere Kantenlänge dem Durchmesser des größeren Kreises der genannten Kreisringfläche entspricht.

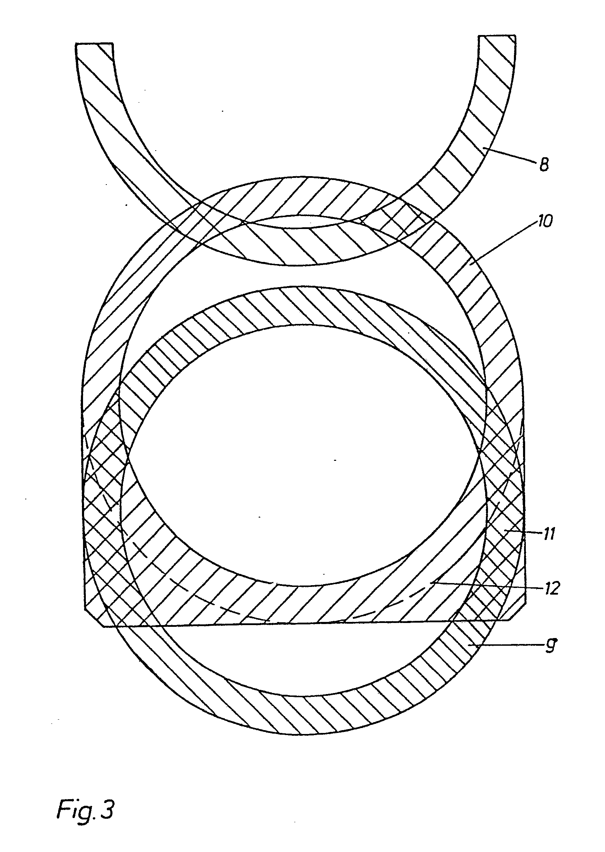

Die sich aus dieser Vergrößerung der Dichtflächen 10 der Schieberplatte 4 bei Offen- bzw. Schließstellung des Schiebers ergebenden Auflageflächen sind in der Fig. 3 verdeutlicht. In dieser Figur ist angenommen, daß sich der Schieber in einer teilweise geschlossenen Stellung befindet. Der Anteil der Dichtflächen 10 der Schieberplatte 4, der in dieser Stellung des Schiebers an der gehäuseseitigen Dichtfläche 9 anliegt, ist durch die doppelt schraffierte Fläche 11 wiedergegeben. In der Fig. 3 ist durch die gestrichelt gezeichnete Kreislinie 12 eine bisherige Ausführungsform der Dichtflächen der Schieberplatte 4 als Kreisringfläche angedeutet. Um den über diese Kreislinie 12 hinausgehenden Anteil der Fläche 11 ist der Schieberplatte 4 die Auflagefläche vergrößert. Da darüber hinaus die Breite der Dichtfläche 10 der Schieberplatte 4 gleich dem größeren Durchmesser der gehäuseseitigen Dichtfläche 9 entspricht, überdeckt die Schieberplatte 4 in jeder Schieberstellung die gesamte Breite der gehäuseseitigen Dichtfläche 9. Daraus ergibt sich eine Führung der Schieberplatte 4 über deren gesamte Breite.

Die Erfindung ist an einem Absperrschieber mit zwei parallel angeordnete Schieberplatten erläutert. Sie läßt sich in gleicher Weise auf andere Plattenabsperrsysteme mit einer einzigen oder mehreren Schieberplatten anwenden.

## Patentanspruch

1. Absperrschieber zum Verschließen von Rohrleitungen, in dessen Gehäuse (1) eine oder mehrere Schieberplatten (4) durch eine Spindel (6) verstellbar angeordnet sind, wobei die Schieberplatten (4) auf der der Spindel (6) abgewandten Seite eine rechteckige Außenkontur aufweisen und mit vorstehenden Dichtflächen (10) versehen sind, die mit kreisringförmigen vorstehenden Dichtflächen (9) im Gehäuse (1) des Absperrschiebers zusammenwirken, wobei die Dichtfläche (10) der Schieberplatte (4) auf der der Spindel (6) zugewandten Seite durch eine kreisringförmige Fläche gebildet und auf der anderen Seite einerseits durch die Umfangslinie eines halben Quadrates begrenzt ist, dessen Kantenlänge dem Durchmesser des größeren Kreises der kreisringförmigen Fläche entspricht, dadurch gekennzeichnet, daß die Dichtfläche (10) der Schieberplatte auf der anderen Seite andererseits durch die Umfangslinie des kleineren Kreises der kreisringförmigen Fläche begrenzt ist, und daß keine zusätzlichen Dichtflächen innerhalb des kleineren Kreises vorgesehen sind.

## Revendication

Vanne d'arrêt pour la fermeture de tuyauteries, dans le corps (1) de laquelle sont disposés un ou plusieurs opercules (4) réglables au moyen d'une tige (6), les opercules (4) se trouvant du côté opposé à la tige (6) ayant un contour extérieur carré et étant pourvus de surfaces d'étanchéité (10) faisant saillie et agissant en commun avec des surfaces d'étanchéité (9) circulaires faisant saillie dans le corps (1) de la vanne d'arrêt, la surface d'étanchéité (10) de l'opercule (4) sur le côté tourné vers la tige (6) ayant une forme circulaire et étant dèlimitée sur le côté opposé d'une part par le contour d'un demi-carré dont la longueur de côté correspond au diamètre du cercle plus grand de la surface circulaire, caractérisée en ce que la surface d'étanchéité (10) de l'opercule (4) sur le côté opposé est délimitée d'autre part par le contour du cercle plus petit de la surface circulaire et qu'il n'y a pas de surfaces d'étanchéité supplémentaires à l'intérieur du cercle plus petit.

## Claim

Gate valve for shutting pipes, in the body (1) of which one or more stem (6) adjustable disks (4) are arranged where the disks (4) show, on the averse side of the stem (6), a rectangular outside contour being provided with protruding sealing surfaces (10) which cooperate with circular protruding sealing surfaces (9) in the body (1) of the gate valve and where the sealing surface (10) of the disk (4), on the side facing the stem (6), is formed by a circular surface and, on the other side, is limited, for the one, by the circumferential line of half a square whose edge length corresponds to the diameter of the largest circle of the circular surface, characterized by the fact that the sealing surface (10) of the disk (4), for the other, is limited on the other side by the circumferential line of the smaller circle of the circular surface and that inside the smaller circle no additional sealing surfaces are provided.

Fig. 1

Fig. 2

*Fig.3*